# EUROPÄISCHE PATENTSCHRIFT

(11) **EP 1 757 863 B1**
(45) Veröffentlichungstag und Bekanntmachung des Hinweises auf die Patenterteilung: **17.10.2018**
(21) Anmeldenummer: 06118430.5
(22) Anmeldetag: 04.08.2006
(51) Int. Cl.: C03C 1/00, C23C 18/12, C23D 5/02, F24C 14/02, F24C 15/00, F24C 15/16

(54) **HAUSHALTSBACKOFEN MIT EINEM GARGERÄTEZUBEHÖRTEIL UND VERFAHREN ZUM HERSTELLEN EINES HAUSHALTSBACKOFENS UND GARGERÄTEZUBEHÖRTEILS**
HOUSEHOLD OVEN WITH A COOKING ACCESSORY AND METHOD FOR PRODUCTION OF HOUSEHOLD OVEN AND COOKING ACCESSORY
FOUR DOMESTIQUE AVEC ACCESSOIRE DE CUISSON ET PROCÉDÉ DE FABRICATION D'UN FOUR DOMESTIQUE ET ACCESSOIRE DE CUISSON

(30) Priorität: 23.08.2005 DE 102005039883
(43) Veröffentlichungstag der Anmeldung: 28.02.2007
(73) Patentinhaber: BSH Hausgeräte GmbH, 81739 München (DE)
(72) Erfinder: Jördens, Frank, 83278, Traunstein (DE); Salomon, Jürgen, 83308, Trostberg (DE); Schmidmayer, Gerhard, 83093, Bad Endorf (DE)

(56) Entgegenhaltungen:
- EP-A1- 1 165 152
- EP-A1- 1 448 721
- WO-A2-2005/066388
- DE-A1- 2 517 526
- DE-A1- 2 828 613
- US-A- 4 636 440
- US-A1- 2002 142 150

## Beschreibung

Die Erfindung betrifft einen Haushaltsbackofen mit einem Gargerätezubehörteil nach Anspruch 1 und ein Verfahren zum Herstellen eines Haushaltsbackofens mit einem Gargerätezubehörteil nach Anspruch 5.
Aus dem Stand der Technik sind Gargerätezubehörteile, beispielsweise Auszugsysteme zum Halten von Gargutträgern, bekannt, die zum Anordnen in einem Garraum eines Gargeräts vorgesehen sind und einen Grundkörper aus Stahl und eine Beschichtung aus Chrom aufweisen. In das Beschichtungsmaterial Chrom können sich während eines Pyrolysevorgangs Flecken einbrennen, so dass solche Gargerätezubehörteile in pyrolysefähigen Gargeräten stets herausnehmbar ausgestaltet sind und vor dem Durchführen einer Pyrolyse auch herausgenommen werden sollten.
Die US 2002/0142150 A1 offenbart beschichtete Substrate mit einer selbstreinigenden Oberfläche. Ein Haushaltsbackofen und Verfahren zum Herstellen eines Haushaltsbackofens gemäß der Oberbegriffe der Ansprüche 1 und 5 sind aus WO 2005/066388 A2 bekannt. Weitere Öfen und Verfahren sind aus US 4,636,440 bekannt.

Die Aufgabe der Erfindung besteht insbesondere darin, einen gattungsgemäßen Haushaltsbackofen mit Gargerätezubehörteil mit einer pyrolysefesten Beschichtung auszustatten. Zudem besteht die Aufgabe der Erfindung darin, eine Beschichtung mit guten Reinigungseigenschaften bereitzustellen, die ferner stoßfest ist und auch bei extremer Belastung nicht von dem Grundkörper abplatzt. Die Aufgabe wird erfindungsgemäß durch die Merkmale der Patentansprüche 1 und 5 gelöst, während vorteilhafte Ausgestaltungen und Weiterbildungen der Erfindung den Unteransprüchen entnommen werden können.
Die Erfindung geht aus von einem Haushaltsbackofen mit einem Gargerätezubehörteil zum Anordnen in einem Garraum eines Gargeräts mit einem Grundkörper aus Metall und mit einer Beschichtung aus einem Beschichtungsmaterial.
Es wird vorgeschlagen, dass das Beschichtungsmaterial glasartig und silikathaltig ist und aus einer Flüssigphase auf den Grundkörper aus Metall aufgebracht ist. Durch die Glasartigkeit der Beschichtung kann eine Anpassung der Schicht auch an kleine Strukturen des Grundkörpers, wie beispielsweise an einen Draht, erreicht werden. Ferner kann durch die glasartige Vernetzung eine hohe Festigkeit des Beschichtungsmaterials erreicht werden. Als "glasartig" soll in diesem Zusammenhang jeder amorphe Festkörper, ob transparent oder opak, bezeichnet werden. Durch das Aufbringen des Beschichtungsmaterials aus einer Flüssigphase, beispielsweise aus einem so genannten Sol, d. h. einer kolloidalen Lösung des Beschichtungsmaterials, oder aus einer andersartigen Lösung des Beschichtungsmaterials, kann eine Dicke der Beschichtung sehr präzise kontrolliert werden. Entsprechende Verfahren zur Beschichtung aus der Flüssigphase werden auch unter dem Begriff "Wet Coating" und "Sol-Gel-Verfahren" zusammengefasst.

Durch eine hinreichend geringe Dicke kann ein Abplatzen der Beschichtung durch insbesondere temperaturbedingte Materialspannungen vermieden werden. Wegen der hohen Temperaturbeständigkeit des erfindungsgemäßen Haushaltsbackofens mit Gargerätezubehörteil ist eine Verwendung im Zusammenhang mit Gargeräten mit Pyrolysefunktion besonders gewinnbringend, da auf ein Herausnehmen des Gargerätezubehörteils vor dem Durchführen einer Pyrolyse verzichtet werden kann.

In der Erfindung wird vorgeschlagen, dass eine Dicke des Beschichtungsmaterials zwischen 5 und 10 µm beträgt. Dadurch kann ein Abplatzen des Beschichtungsmaterials sicher vermieden werden und es kann weiter vermieden werden, dass Oberflächenstrukturen des Grundkörpers, die für ein Design oder für eine Funktion des Gargerätezubehörteils relevant sind, von der Beschichtung überdeckt werden. Einerseits kann eine hinreichende Kratzfestigkeit und andererseits kann eine hinreichende Sicherheit gegen das Abplatzen erreicht werden, da die Dicke des Beschichtungsmaterials zwischen 0,5 µm und 10 µm liegt.

Eine hohe Stabilität und/oder Flexibilität der Beschichtung kann erreicht werden, da eine Vernetzung des Beschichtungsmaterials durch eine Polykondensation erzeugt ist. Durch die Polykondensation können besonders vorteilhaft Silane zu Kettenmolekülen mit einer netzartigen Struktur vernetzt werden. Als Brückenbildner werden Metallalkoxide, mit Titan, Aluminium oder Zirkonium, verwendet.

Das Beschichtungsmaterial kann ferner mit einem Pigment, beispielsweise mit einem Perlglanzpigment, versehen sein.

Eine Pyrolysefestigkeit kann gewährleistet werden, wenn das Beschichtungsmaterial zumindest bis 500°C, besonders vorteilhaft bis 550°C oder 600°C, temperaturbeständig ist. Die Temperaturbeständigkeit kann durch eine geeignete Wahl des Beschichtungsmaterials und/oder durch eine hinreichend dünne Beschichtung erreicht werden. Wird die Beschichtung in einem Tauchverfahren aufgebracht, kann eine Stärke bzw. Dicke der Beschichtung gemäß der bekannten Landau-Levich-Gleichung durch eine geeignete Wahl der Herausziehgeschwindigkeit des Gargerätezubehörteils aus einem Tauchbad und durch eine Kontrolle einer Viskosität und einer spezifischen Dichte des Tauchbads sowie seiner Oberflächenspannung bestimmt werden.
Weist das Beschichtungsmaterial wenigstens eine chemische Gruppe auf, die dazu vorgesehen ist, eine kovalente Bindung zwischen dem Beschichtungsmaterial und der metallischen Oberfläche zu erzeugen, kann ein sicherer Halt des Beschichtungsmaterials an der metallischen Oberfläche des Grundkörpers erreicht werden. Auf ein aufwändiges Aufrauen der Oberfläche kann unter Umständen verzichtet werden.

Ferner betrifft die Erfindung Verfahren zum Herstellen eines Haushaltsbackofens mit Gargerätezubehörteil mit einem metallischen Grundkörper und einer Beschichtung aus einem Beschichtungsmaterial.
Es wird vorgeschlagen, dass die Beschichtung aus einer Flüssigphase bzw. in einem Wet-Coating-Prozess erfolgt. Dadurch ist insbesondere eine sichere Kontrolle einer Schichtdicke der Beschichtung erreichbar.
Auf bekannte Elemente aus der Sol-Gel-Chemie kann zurückgegriffen werden, wenn das Beschichtungsmaterial in der Flüssigphase als Kolloid gelöst ist.
Eine besonders robuste Schicht mit guten Reinigungseigenschaften kann hergestellt werden, da in einer Vernetzungsphase des Verfahrens das Beschichtungsmaterial durch Polykondensation glasartig vernetzt wird.
Weitere Vorteile ergeben sich aus der folgenden Zeichnungsbeschreibung. In der Zeichnung sind Ausführungsbeispiele der Erfindung dargestellt.

Es zeigen:
- Fig. 1: einen Haushaltsbackofen mit einem Garraum und mehreren Gargerätezubehörteilen,
- Fig. 2: ein Gargerätezubehörteil des Haushaltsbackofens aus Figur 1,
- Fig. 3: das Gargerätezubehörteil aus Figur 2 in einem Schnitt entlang der Linie III - III,
- Fig. 4: eine schematische Darstellung zu einem Verfahren zum Herstellen eines Gargerätezubehörteils gemäß den Figuren 1 - 3 und
- Fig. 5: ein Gargerätezubehörteil eines alternativen Gargeräts.

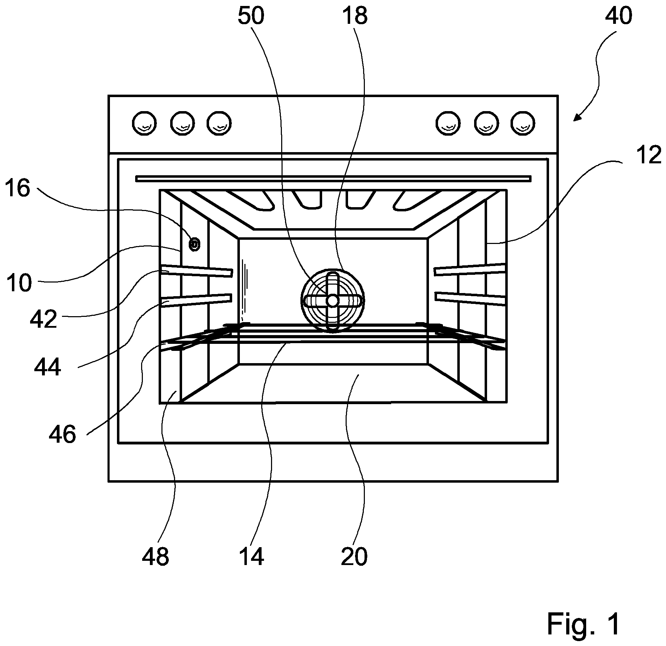

Figur 1 zeigt einen Haushaltsbackofen 40 mit einem Garraum 20 und mehreren Gargerätezubehörteilen 10 - 18, die lösbar in dem Garraum 20 angeordnet sind. Ein erstes Paar von Gargerätezubehörteilen 10, 12 ist als Einhängegitter mit drei Auszugschienen 42 - 46 ausgebildet. Die beiden Gargerätezubehörteile 10, 12 sind an beiden Seiten des Garraums 20 spiegelsymmetrisch angeordnet und in hier nicht explizit dargestellte, schlüssellochartige Öffnungen in seitlichen Wänden des Garraums 20 eingehängt. Die Gargerätezubehörteile 10, 12 können zum Einlegen in eine Spülmaschine oder zum manuellen Spülen aus dem Garraum 20 entnommen werden, ohne dass dazu die Verwendung eines Werkzeugs nötig wäre.
Ferner ist im Garraum 20 ein als Grillrost ausgebildetes Gargerätezubehörteil 14 angeordnet, das zur Verwendung im Zusammenhang mit einer hier nicht dargestellten Fettpfanne vorgesehen ist. Weitere Gargerätezubehörteile 16, 18 sind mit einer den Garraum 20 begrenzenden Muffel 48 verschraubt. Dies sind ein als Lampenfassung ausgebildetes Gargerätezubehörteil 16 und ein als Gitter ausgebildetes Gargerätezubehörteil 18, das vor einem an einer Rückseite des Garraums 20 angeordneten Lüfterrad 50 angeordnet ist.

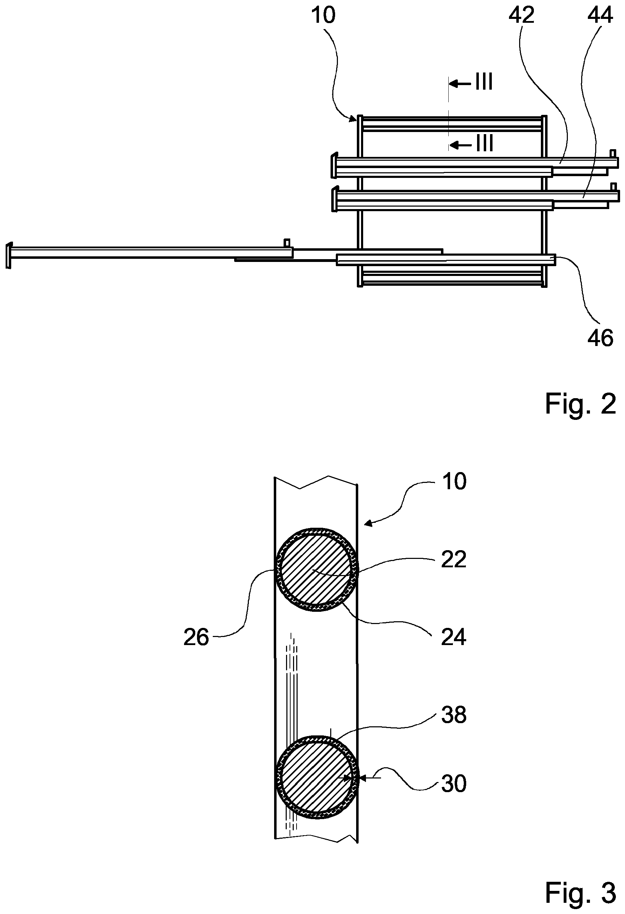

Alle Gargerätezubehörteile 10 - 18 weisen einen Grundkörper 22 aus Metall, und zwar aus gebogenem und verschweißtem Stahldraht, und eine Beschichtung 24 aus einem glasartigen Beschichtungsmaterial 26 auf, die in Figur 3 an einem der als Einhängegitter ausgebildeten Gargerätezubehörteile 10, 12 exemplarisch dargestellt ist. Wie das in Figur 3 dargestellte Gargerätezubehörteil 10 weisen auch die übrigen Gargerätezubehörteile 12 - 18 eine Beschichtung 24 der in Figur 3 dargestellten Art auf, so dass die folgende Beschreibung analog auf die Gargerätezubehörteile 12 - 18 anwendbar ist.

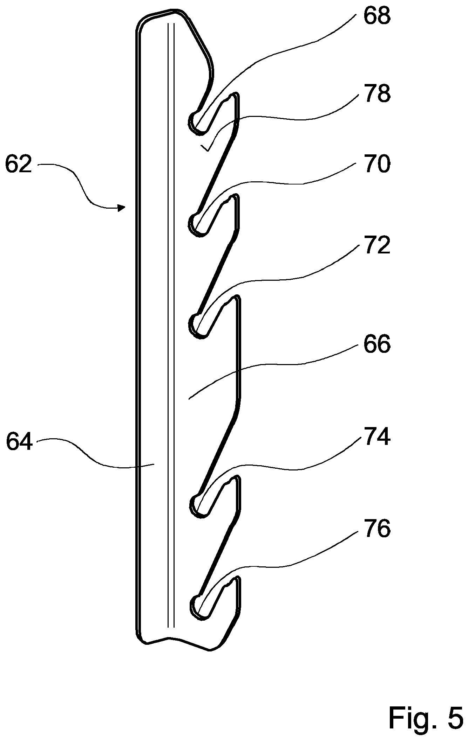

In einer hier nicht explizit dargestellten Bauvariante, in der anstatt einer schwenkbaren Tür und der Auszugschienen 42 - 46 ein Backwagen zum Einschieben von Gargut in den Garraum 20 vorgesehen ist, sind Hakenschienen zum Einhängen von Gargutträgern ebenfalls mit der erfindungsgemäßen Beschichtung 24 versehen (vgl. Figur 5).

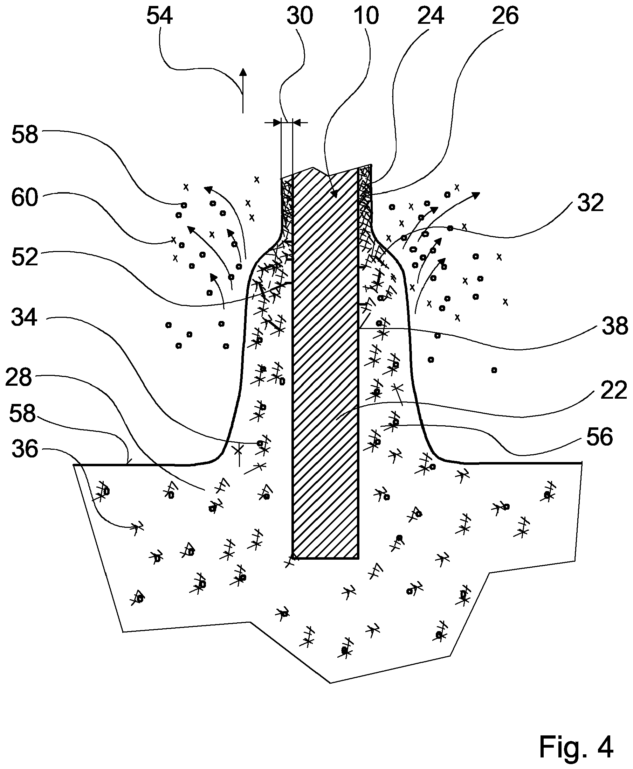

Die Beschichtung 24 hat eine Dicke 30 von maximal 10 µm und ist in einer weiter unten detaillierter beschriebenen Weise in einem Sol-Gel-Verfahren aus einer Flüssigphase 28 auf den Grundkörper 22 aus Metall aufgebracht (Figur 4). Das Beschichtungsmaterial 26 ist glasartig und silikathaltig. Eine Vernetzung 32 des Beschichtungsmaterials 26 ist im Sol-Gel-Verfahren durch Polykondensation erzeugt.

Durch die geringe Dicke 30 von weniger als 10 µm ist die Beschichtung 24 sehr temperaturbeständig bis zu einer Temperatur von über 500° C, so dass auch während eines Pyrolysevorgangs das Gargerätezubehörteil 10 nicht aus dem Garraum 20 entnommen werden muss, da es durch die Beschichtung 24 vor dem Einbrennen von Flecken geschützt ist.

Eine stoffschlüssige Verbindung zwischen dem Beschichtungsmaterial 26 und einer metallischen Oberfläche 38 des Grundkörpers 22 wird durch kovalente Bindungen 52, und zwar durch Sauerstoff-Brückenbindungen, erzeugt, die im Herstellungsverfahren durch eine entsprechende chemische Gruppe 34 in dem Beschichtungsmaterial 26 entstehen.

Figur 4 zeigt schematisch ein Verfahren zum Herstellen bzw. zum Beschichten eines Gargerätezubehörteils 10 der erfindungsgemäßen Art. In einer ersten, hier nicht explizit dargestellten Herstellungsphase wird der Grundkörper 22 in einer an sich bekannten Weise aus Draht und/oder Blech hergestellt. Das Beschichtungsmaterial 26, das Metallalkoxide mit Titan, Aluminium oder Zirkon als Metall enthält, wird als Kolloid 36 in einem Sol bzw. in einer Flüssigphase 28 gelöst. Anschließend wird das Gargerätezubehörteil 10 in die Flüssigphase 28 eingetaucht und mit einer bestimmten, konstanten, präzise bestimmten Herausziehgeschwindigkeit 54 aus der Flüssigphase 28 herausgezogen. Die Herausziehgeschwindigkeit 54 ist so gewählt, dass sich nach dem Verdunsten des Lösungsmittels unter Berücksichtigung eines durch das Verdunsten bedingten Einschrumpfens eine Dicke 30 der Beschichtung 24 von höchstens 10 µm ergibt.

Eine den Grundkörper 22 benetzende Schicht 56 der Flüssigphase 28 ist unmittelbar nach dem Herausziehen aus der Flüssigphase 28 in einem Bereich oberhalb einer Oberfläche 58 der Flüssigphase 28 flüssig und geliert durch das Verdunsten des Lösungsmittels schnell zu der glasartigen, harten und dünnen Beschichtung 24. Dabei bilden die Metallalkoxide des Beschichtungsmaterials 26 Vernetzungen 32 zwischen den Silizium-Zentren des Beschichtungsmaterials 26 aus. Eine geeignete Wahl der Atmosphäre beschleunigt das Verdunsten von Wassermolekülen 58 und Alkoholmolekülen 60. Durch das Verdunsten der Wassermoleküle 58 und Alkoholmoleküle 60 verdichtet sich das Beschichtungsmaterial 26 schließlich zu einem monolithischen Material.

Spezielle chemische Gruppen 34 bilden bei Kontakt mit der metallischen Oberfläche 38 des Grundkörpers 22 kovalente Bindungen 52 mit dieser aus, so dass eine feste, stoffschlüssige Verbindung zwischen dem Grundkörper 22 und dem Beschichtungsmaterial 26 entsteht. Es kann nicht, wie beispielsweise bei einer Emaillierung, zu Durchzehrungen oder Metallisierungen der Beschichtung 24 kommen.

Eine weitere Behandlung, beispielsweise ein Ausheizen der Beschichtung 24, kann in einer dem Fachmann als sinnvoll erscheinenden Weise erfolgen. Das Verfahren zum Beschichten des Gargerätezubehörteils 10 ist damit abgeschlossen, und das Gargerätezubehörteil 10 ist mit einer pyrolysefesten Beschichtung 24 ausgestattet, die auch bei hohen Temperaturen von über 500 °C und bei großen Stoßbelastungen nicht von dem metallischen Grundkörper 22 des Gargerätezubehörteils 10 abplatzen kann.

Figur 5 zeigt ein als Hakenschiene ausgebildetes, weiteres Gargerätezubehörteil 62 eines hier nicht vollständig dargestellten Haushaltsbackofens mit Backwagen. Das Gargerätezubehörteil 62 weist im Großen die Form eines Winkelprofils mit einem kürzeren Schenkel 64 und einem längeren Schenkel 66 auf. In dem längeren Schenkel 66 sind insgesamt fünf schräg zu einer Längserstreckung des Gargerätezubehörteils 62 verlaufende Ausnehmungen 68 - 76 angeordnet, in die jeweils Gargutträger eingehängt werden können.

Das Gargerätezubehörteil 62 ist im eingebauten Zustand an einem Seitenbereich einer Tür des Haushaltsbackofens angeordnet und ist Teil einer Trägervorrichtung, die neben dem Gargerätezubehörteil 62 ein komplementäres, zum Gargerätezubehörteil 62 spiegelsymmetrisches Gargerätezubehörteil umfasst. Das Gargerätezubehörteil 62 und sein spiegelsymmetrisches Gegenstück weisen jeweils eine Beschichtung 78 der oben beschriebenen Art auf und sind daher pyrolysefest und komfortabel zu reinigen. Ein Einbrennen von Speiseresten, das zu einer Verfleckung oder Beschädigung führen kann, ist durch die Beschichtung 78 sicher vermieden.

**Bezugszeichen**

| | | | |
|---|---|---|---|
| 10 | Gargerätezubehörteil | 62 | Gargerätezubehörteil |
| 12 | Gargerätezubehörteil | 64 | Schenkel |
| 14 | Gargerätezubehörteil | 66 | Schenkel |
| 16 | Gargerätezubehörteil | 68 | Ausnehmung |
| 18 | Gargerätezubehörteil | 70 | Ausnehmung |
| 20 | Garraum | 72 | Ausnehmung |
| 22 | Grundkörper | 74 | Ausnehmung |
| 24 | Beschichtung | 76 | Ausnehmung |
| 26 | Beschichtungsmaterial | 78 | Beschichtung |
| 28 | Flüssigphase | | |
| 30 | Dicke | | |
| 32 | Vernetzung | | |
| 34 | Gruppe | | |
| 36 | Kolloid | | |
| 38 | Oberfläche | | |
| 40 | Haushaltsbackofen | | |
| 42 | Auszugschiene | | |
| 44 | Auszugschiene | | |
| 46 | Auszugschiene | | |
| 48 | Muffel | | |
| 50 | Lüfterrad | | |
| 52 | Bindung | | |
| 54 | Herausziehgeschwindigkeit | | |
| 56 | Schicht | | |
| 58 | Wassermolekül | | |
| 60 | Alkoholmolekül | | |

## Patentansprüche

1. Haushaltsbackofen mit einem Gargerätezubehörteil (10 - 18, 62) zum Anordnen in einem Garraum (20) eines Gargeräts mit einem Grundkörper (22) aus Metall und mit einer Beschichtung (24, 78) aus einem Beschichtungsmaterial (26), wobei das Beschichtungsmaterial (26) glasartig und silikathaltig ist und aus einer Flüssigphase (28) auf den Grundkörper (22) aus Metall aufgebracht ist, wobei die Dicke (30) des Beschichtungsmaterials (26) zwischen 0,5 µm und 10 µm liegt,
**dadurch gekennzeichnet, dass** das Beschichtungsmaterial (26) Metallalkoxide mit Titan, Aluminium oder Zirkon als Metall enthält, die Vernetzungen zwischen Silizium-Zentren des Beschichtungsmaterials (26) ausbilden.

2. Haushaltsbackofen nach Anspruch 1, **dadurch gekennzeichnet, dass** eine Vernetzung (32) des Beschichtungsmaterials (26) durch eine Polykondensation erzeugt ist.

3. Haushaltsbackofen nach einem der vorhergehenden Ansprüche, **dadurch gekennzeichnet, dass** das Beschichtungsmaterial (26) zumindest bis 500°C temperaturbeständig ist.

4. Haushaltsbackofen nach einem der vorhergehenden Ansprüche, **dadurch gekennzeichnet, dass** das Beschichtungsmaterial (26) wenigstens eine chemische Gruppe (34) aufweist, die eine kovalente Bindung (52) über eine Sauerstoff-Brückenbindung zwischen dem Beschichtungsmaterial (26) und einer metallischen Oberfläche (38) des Grundkörpers (22) erzeugt.

5. Verfahren zum Herstellen eines Haushaltsbackofens mit einem Gargerätezubehörteil (10 -18, 62) nach einem der vorhergehenden Ansprüche, wobei das Gargerätezubehörteil (10-18, 62) einen metallischen Grundkörper (22) und eine Beschichtung (24, 78) aus einem Beschichtungsmaterial (26) umfasst, wobei die Beschichtung (24, 78) aus einer Flüssigphase (28) erfolgt, in der das Beschichtungsmaterial (26) gelöst ist, wobei das resultierende Beschichtungsmaterial (26) glasartig und silikathaltig ist, wobei die Dicke (36) des Beschichtungsmaterials (26) zwischen 0,5 µm und 10 µm liegt, **dadurch gekennzeichnet, dass** das Beschichtungsmaterial (26) Metallalkoxide mit Titan, Aluminium oder Zirkon als Metall enthält, die Vernetzungen zwischen Silizium-Zentren des Beschichtungsmaterials (26) ausbilden.

6. Verfahren nach Anspruch 5, **dadurch gekennzeichnet, dass** das Beschichtungsmaterial (26) in der Flüssigphase (28) als Kolloid (36) gelöst ist.

7. Verfahren nach einem der Ansprüche 5 und 6, **dadurch gekennzeichnet, dass** in einer Vernetzungsphase das Beschichtungsmaterial (26) durch Polykondensation glasartige Vernetzungen (32) ausbildet.

## Claims

1. Household oven with a cooking appliance accessory part (10 - 18, 62) for arrangement in a cooking chamber (20) of a cooking appliance with a base body (22) made of metal and with a coating (24, 78) made of a coating material (26), wherein the coating material (26) is glass-like and contains silicate and is attached to the base body (22) made of metal from a liquid phase (28), wherein the thickness (30) of the coating material (26) is between 0.5 µm and 10 µm, **characterised in that** the coating material (26) contains metal alkoxides, with titanium, aluminium or zircon as the metal, which form networks between silicon centres of the coating material (26).

2. Household oven according to claim 1, **characterised in that** a network (32) of the coating material (26) is generated by polycondensation.

3. Household oven according to one of the preceding claims, **characterised in that** the coating material (26) is temperature-resistant at least up to 500°C.

4. Household oven according to one of the preceding claims, **characterised in that** the coating material (26) has at least one chemical group (34), which generates a covalent bond (52) via an oxygen bridging bond between the coating material (26) and a metal surface (38) of the base body (22).

5. Method for producing a household oven with a cooking appliance accessory part (10 - 18, 62) according to one of the preceding claims, wherein the cooking appliance accessory part (10 - 18, 62) comprises a metal base body (22) and a coating (24, 78) made of a coating material (26), wherein the coating (24, 78) takes place from a liquid phase (28), in which the coating material (26) is dissolved, wherein the resulting coating material (26) is glass-like and contains silicate, wherein the thickness (36) of the coating material (26) is between 0.5 µm and 10 µm, **characterised in that** the coating material (26) contains metal alkoxides, with titanium, aluminium or zircon as the metal, which form networks between silicon centres of the coating material (26).

6. Method according to claim 5, **characterised in that** the coating material (26) is dissolved in the liquid phase (28) as a colloid (36).

7. Method according to one of claims 5 and 6, **characterised in that** the coating material (26) forms glass-like networks (32) in a network phase by polycondensation.

## Revendications

1. Four ménager comprenant un accessoire d'appareil de cuisson (10 à 18, 62) destiné à être agencé dans un espace de cuisson (20) d'un appareil de cuisson avec un corps de base (22) constitué de métal et avec un revêtement (24, 78) constitué d'un matériau de revêtement (26), dans lequel le matériau de revêtement (26) est vitreux et contient des silicates et est appliqué à partir d'une phase liquide (28) sur le corps de base (22) constitué de métal, dans lequel l'épaisseur (30) du matériau de revêtement (26) se situe entre 0,5 µm et 10 µm,
**caractérisé en ce que** le matériau de revêtement (26) contient des alcoxydes métalliques, dont le métal est du titane, de l'aluminium ou du zirconium, qui créent des réticulations entre des noyaux silicium du matériau de revêtement (26).

2. Four ménager selon la revendication 1, **caractérisé en ce qu'**une réticulation (32) du matériau de revêtement (26) est produite grâce à une polycondensation.

3. Four ménager selon l'une quelconque des revendications précédentes, **caractérisé en ce que** le matériau de revêtement (26) est résistant à une température allant au moins jusqu'à 500°C.

4. Four ménager selon l'une quelconque des revendications précédentes, **caractérisé en ce que** le matériau de revêtement (26) présente au moins un groupe chimique (34) qui crée une liaison covalente (52) entre le matériau de revêtement (26) et une surface métallique (38) du corps de base (22) par l'intermédiaire d'une liaison par pont oxygène.

5. Procédé de fabrication d'un four ménager comprenant un accessoire d'appareil de cuisson (10 à 18, 62) selon l'une quelconque des revendications précédentes, dans lequel l'accessoire d'appareil de cuisson (10 à 18, 62) comprend un corps de base (22) métallique et un revêtement (24, 78) constitué d'un matériau de revêtement, dans lequel le revêtement (24, 78) est issu d'une phase liquide (28) dans laquelle est dissout le matériau de revêtement (26), dans lequel le matériau de revêtement (26) résultant est vitreux et contient des silicates, dans lequel l'épaisseur (36) du matériau de revêtement (26) se situe entre 0,5 µm et 10 µm, **caractérisé en ce que** le matériau de revêtement (26) contient des alcoxydes métalliques, dont le métal est du titane, de l'aluminium ou du zirconium, qui créent des réticulations entre des noyaux silicium du matériau de revêtement (26).

6. Procédé selon la revendication 5, **caractérisé en ce que** le matériau de revêtement (26) est dissout dans la phase liquide (28) sous forme de colloïde (36).

7. Procédé selon la revendication 5 ou 6, **caractérisé en ce que**, dans une phase de réticulation, le matériau de revêtement (26) forme des réticulations vitreuses (32) par polycondensation.
